(19)

**Europäisches Patentamt**
**European Patent Office**
**Office européen des brevets**

(11) **EP 2 327 869 A2**

(12) **EUROPEAN PATENT APPLICATION**

(43) Date of publication:
**01.06.2011 Bulletin 2011/22**

(51) Int Cl.:
*F02K 1/38* (2006.01)

(21) Application number: **10176262.3**

(22) Date of filing: **10.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **30.11.2009 US 627141**

(71) Applicant: **Honeywell International Inc.
Morristown, NJ 07962 (US)**

(72) Inventor: **Anderson, Morris
Morristown, NJ 07962-2245 (US)**

(74) Representative: **Buckley, Guy Julian
Patent Outsourcing Limited
1 King Street
Bakewell
Derbyshire DE45 1DZ (GB)**

(54) **Turbofan gas turbine engine aerodynamic mixer**

(57)     A mixer for a turbofan engine (100) includes a centerbody (144) and a mixer nozzle (146). The mixer nozzle (146) surrounds at least a portion of the centerbody (144) and is spaced apart to define a core flow path between the mixer nozzle (146) and the centerbody (144). The mixer nozzle (146) is configured, when bypass air flows through the turbofan engine (100), to direct at least a portion of the bypass air to impinge on the centerbody (144). The mixer nozzle (146) includes a plurality of circumferentially spaced mixer lobes (206) that extend axially in a rearward direction and have a cross-section shape defined by a set of equations.

**FIG. 2**

EP 2 327 869 A2

**Description**

This invention was made with Government support under NAS3-97151 awarded by NASA. The Government has certain rights in this invention.

TECHNICAL FIELD

The present invention generally relates to exhaust flow mixers, and more particularly relates to an exhaust flow mixer for a turbofan engine that improves performance and reduces noise.

BACKGROUND

A gas turbine engine may be used to power various types of vehicles and systems. A particular type of gas turbine engine that may be used to power aircraft is a turbofan gas turbine engine. A turbofan gas turbine engine may include, for example, a fan section, a compressor section, a combustor section, a turbine section, and an exhaust section. The fan section is positioned at the front, or "inlet" section of the engine, and includes a fan that induces air from the surrounding environment into the engine, and compresses a fraction of this air into the compressor section. The remaining fraction of air induced into the fan section is compressed into and through a bypass duct.

The compressor section further raises the pressure of the air it receives from the fan section to a relatively high level. In a multi-spool engine, the compressor section may include two or more compressors, such as, for example, a high pressure compressor and a low pressure compressor. The compressed air from the compressor section then enters the combustor section, where fuel nozzles inject a steady stream of fuel into a plenum formed by liner walls and a dome. The injected fuel is ignited in the combustor, which significantly increases the energy of the compressed air. The high-energy, compressed air from the combustor section then flows into and through the turbine section, causing rotationally mounted turbine blades to rotate and generate energy.

The air exhausted from the turbine section and the bypass air are directed into a mixer. In particular, the bypass air enters the cold side of the mixer and the exhaust air enters the hot side of the mixer. The bypass air and exhaust air exit are mixed upon exiting the mixer. This exhaust/bypass mixture is then discharged from the engine via an exhaust nozzle. Thrust is generated as the exhaust/bypass mixture expands through the exhaust nozzle.

Under ideal theoretical conditions a mixer combines the bypass air and the exhaust air to maximize exhaust jet momentum as the bypass/exhaust mixture expands through the exhaust nozzle. Doing so provides increased thrust and reduced thrust specific fuel consumption (TSFC). The physics that makes this possible is that momentum (exhaust jet thrust) is a linear function of the expanded jet velocity while the kinetic energy of the expanded jet is a function of velocity squared. Hence, it can be shown that a mixed flow stream can be expanded to produce more thrust than the sum of the individual unmixed streams. However, pressure losses associated with the mixing process reduce the available expanded jet velocity which in turn decreases the engine thrust and offsets some of the mixing benefit. Therefore, the challenge in designing an efficient mixer is to maximize the mixing efficiency while at the same time minimize the pressure loss associated with the mixing process.

Recently, many turbofan engines use what are referred to as multi-lobed mixers. Most multi-lobed mixers are constructed with lobes formed from straight sidewalls and circular arcs. Indeed, multi-lobed mixers with these types of mixer lobes has become an industry standard based on the conclusion that this type of lobe quickly mixes the bypass air and exhaust air. While this industry standard practice of manufacturing mixers with lobes formed from straight sidewalls, which are usually almost parallel, and circular arcs generally works well to maximize mixing efficiency, it does not address the goal of minimizing the associated pressure loss.

Accordingly, there is a need for an improved mixer design that maximizes the mixing efficiency and minimizes the associated pressure loss to significantly reduce the fuel consumption of a turbofan engine. The present invention addresses at least this need.

BRIEF SUMMARY

In one exemplary embodiment, a mixer nozzle for a turbofan engine includes a main body having a forward end, an aft end, a plurality of circumferentially spaced mixer lobes extending therefrom, and an inner surface that defines a flow passage between the forward end and the aft end. Each of the mixer lobes extends axially in a rearward direction toward the aft end and has a cross-section shape defined by a set of equations.

In another exemplary embodiment, a mixer for a turbofan engine includes a centerbody and a mixer nozzle. The centerbody is adapted to couple to a turbofan engine section. The mixer nozzle surrounds at least a portion of the centerbody and is spaced apart therefrom to define a core flow path between the mixer nozzle and the centerbody. The mixer nozzle is adapted to couple to the turbofan engine and includes a forward end, an aft end, and a plurality of circumferentially spaced mixer lobes. Each of the mixer lobes extends axially in a rearward direction toward the aft end. A portion of the mixer lobes extend radially inwardly, and a portion of the mixer lobes extend radially outwardly. The mixer nozzle is configured, when bypass air flows through the turbofan engine, to direct at least a portion of the bypass air to impinge on the centerbody.

In still another exemplary embodiment, a turbofan engine includes an engine nacelle, a gas turbine engine, a fan, and a mixer assembly. The engine nacelle has an inner surface. The gas turbine engine is mounted in the engine nacelle and is spaced apart from the nacelle inner surface to define a bypass flow passage between the engine nacelle inner surface and the gas turbine engine. The gas turbine engine is configured to rotate and supply a rotational drive force, and is further configured to receive a flow of air and fuel and to discharge exhaust gas. The fan is rotationally mounted within the engine nacelle and is coupled to receive the rotational drive force from the gas turbine engine. The fan is configured, upon receipt of the rotational drive force, to supply a flow of bypass air to the bypass flow passage and a flow of intake air to the gas turbine engine. The mixer assembly is mounted in the engine nacelle, and is coupled to receive and mix the bypass air and the exhaust gas. The mixer assembly includes a centerbody, and a mixer nozzle. The centerbody is coupled to the gas turbine engine. The mixer nozzle surrounds at least a portion of the centerbody and is spaced apart therefrom to define an exhaust flow path between the mixer nozzle and the centerbody. The mixer nozzle is coupled to the gas turbine engine and includes a forward end, an aft end, and a plurality of circumferentially spaced mixer lobes. Each of the mixer lobes extends axially in a rearward direction toward the aft end. A portion of the mixer lobes extend radially inwardly, and a portion of the mixer lobes extend radially outwardly. The mixer is configured to direct at least a portion of the bypass air to impinge on the centerbody.

Furthermore, other desirable features and characteristics of the mixer nozzle and mixer assembly will become apparent from the subsequent detailed description of the invention and the appended claims, taken in conjunction with the accompanying drawings and this background of the invention.

BRIEF DESCRIPTION OF THE DRAWINGS

The present invention will hereinafter be described in conjunction with the following drawing figures, wherein like numerals denote like elements, and

FIG. 1 depicts a functional block diagram of an exemplary gas turbine engine

FIGS. 2-4 are perspective, side, and end views, respectively, of a particular preferred embodiment of a mixer that may be incorporated into the exemplary engine depicted in FIG. 1;

FIG. 5 depicts a simplified representation of an outline of a mixer nozzle, as viewed from aft looking forward, overlying a Cartesian coordinate system to clearly illustrate various equation variables;

FIG. 6 depicts two different exemplary mixer lobe cross-section shapes implemented according to the present invention;

FIG. 7 depicts a profile of a single mixer lobe;

FIGS. 8-10 depict perspective, side, and end views, respectively, of an embodiment of conventional mixer;

FIGS. 11 and 12 depict simplified cross-section views of single mixer lobes taken along line 11-11 in FIG. 10 and line 12-12 in FIG. 4, respectively;

FIGS. 13-16 depict comparisons of various performance parameters in a turbofan engine equipped with a conventional mixer and with an inventive mixer 138 as described herein; and

FIG. 17 depicts the profile of FIG. 7 and further illustrates bypass air flow directly impinginging upon a centerbody.

DETAILED DESCRIPTION

The following detailed description is merely exemplary in nature and is not intended to limit the invention or the application and uses of the invention. Furthermore, there is no intention to be bound by any theory presented in the preceding background or the following detailed description.

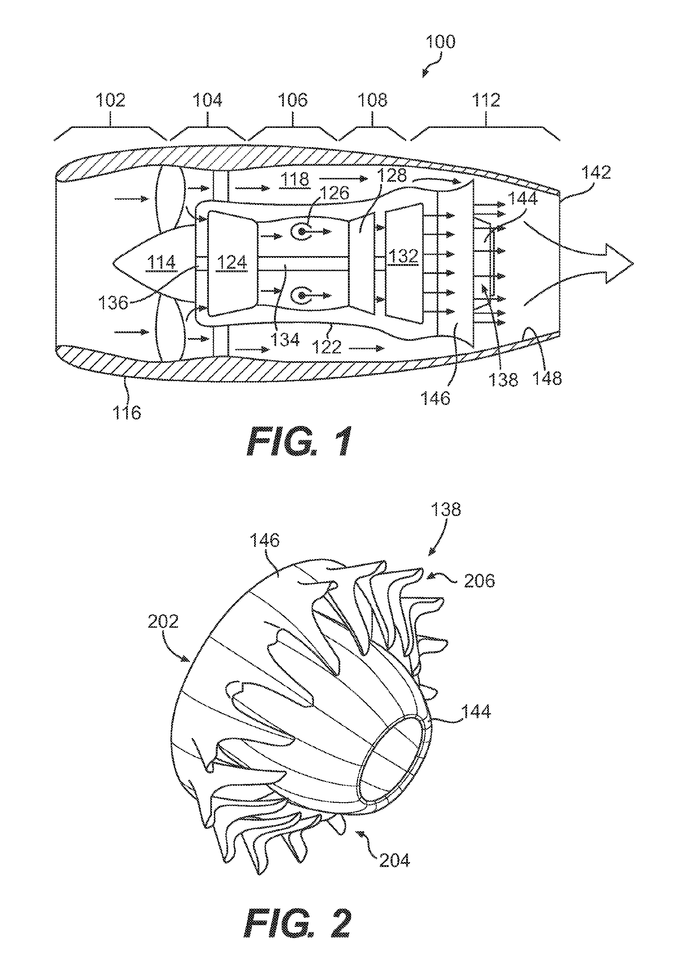

Turning now to FIG. 1, a functional block diagram of an exemplary gas turbine engine is depicted. The depicted engine 100 is a multi-spool turbofan gas turbine propulsion engine, and includes an intake section 102, a compressor section 104, a combustion section 106, a turbine section 108, and an exhaust section 112. The intake section 102 includes a fan 114, which is mounted in a fan case or nacelle 116. The fan 114 draws air into the intake section 102 and accelerates it. A fraction of the accelerated air exhausted from the fan 114 is directed through a bypass flow passage 118 defined between the nacelle 116 and an engine cowl 122. This fraction of air flow is referred to herein as bypass air flow. The remaining fraction of air exhausted from the fan 114 is directed into the compressor section 104.

The compressor section 104 may include one or more compressors 124, which raise the pressure of the air directed into it from the fan 114, and direct the compressed air into the combustion section 106. In the depicted embodiment, only a single compressor 124 is shown, though it will be appreciated that one or more additional compressors could be used. In the combustion section 106, which includes a combustor assembly 126, the compressed air is mixed with fuel supplied from a non-illustrated fuel source. The fuel and air mixture is combusted, and the high energy combusted fuel/air mixture is then directed into the turbine section 108.

The turbine section 108 includes one or more turbines. In the depicted embodiment, the turbine section 108 includes two turbines, a high pressure turbine 128, and a low pressure turbine 132. However, it will be appreciated that the engine 100 could be configured with more or less than this number of turbines. No matter the particular number, the combusted fuel/air mixture from the combustion section 106 expands through each turbine 128, 132, causing it to rotate. As the turbines 128 and 132 rotate, each drives equipment in the engine 100 via concentrically disposed shafts or spools. Specifically, the high pressure turbine 128 drives the compressor 124 via a high pressure spool 134, and the low pressure turbine 132 drives the fan 114 via a low pressure spool 136. The gas exhausted from the turbine section 108 is then directed into the exhaust section 112.

The exhaust section 112 includes a mixer 138 and an exhaust nozzle 142. The mixer 138 includes a centerbody 144 and a mixer nozzle 146, and is configured to mix the bypass air flow with the exhaust gas from the turbine section 108. The bypass air/exhaust gas mixture is then expanded through the propulsion nozzle 142, providing forward thrust. The mixer 138, an embodiment of which will now be described in more detail, provides increased mixing efficiency and lower pressure loss as compared to presently known mixers. As a result, the mixer 138 significantly reduces the specific fuel consumption of the turbofan engine 100.

Turning now to FIGS. 2-4, perspective, side, and end views, respectively, of a particular preferred embodiment of the mixer 138 are depicted. The mixer 138, as noted above, includes the centerbody 144 and the mixer nozzle 146. The centerbody 144 is adapted to couple to the turbine section 108, and extends axially from the engine cowl 122 in a downstream direction. The centerbody 144, when coupled to the turbine section 108, is disposed radially inwardly from an inner surface 148 (see FIG. 1) of the engine cowl 122.

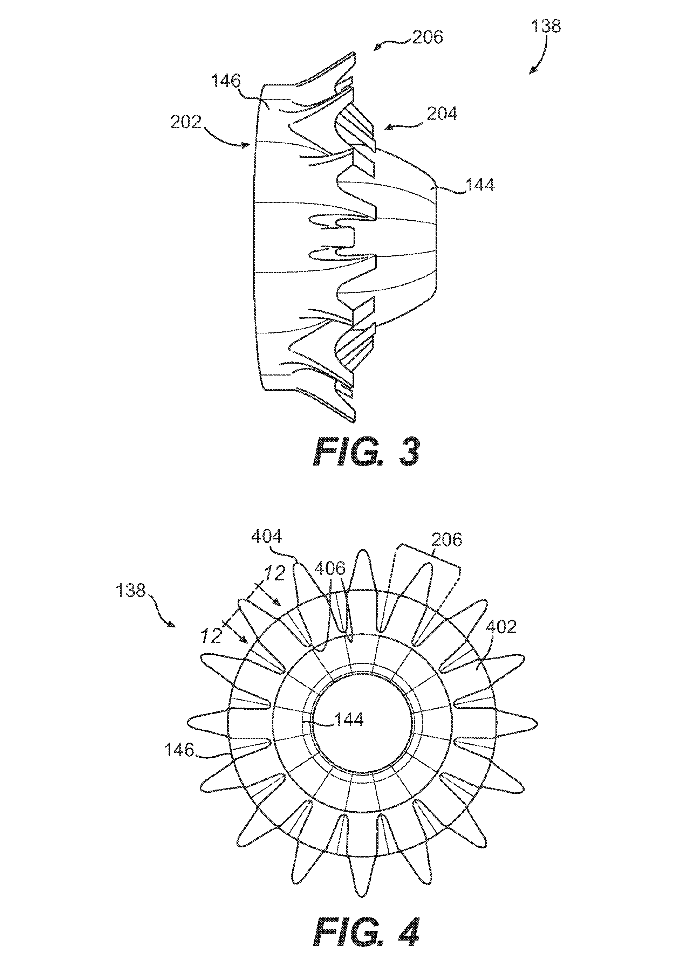

The mixer nozzle 146 is adapted to couple to the engine cowl 122. The mixer nozzle 146, when coupled to the engine cowl 122, surrounds at least a portion of the centerbody 144 and is spaced apart therefrom to define an exhaust flow path 402 (see FIG. 4) between the mixer nozzle 146 and the centerbody 144. The mixer nozzle 146, when coupled to the engine cowl 122, is also disposed radially inwardly of the nacelle 116. Thus, the bypass air and exhaust gas both flow past the mixer nozzle 146. The mixer nozzle 146, via the preferred configuration that will now be described, mixes the bypass air and exhaust gas.

The mixer nozzle 146 includes a forward end 202, an aft end 204, and a plurality of circumferentially spaced mixer lobes 206. It is seen most clearly in FIGS. 2 and 3 that each of the mixer lobes 206 extends axially, in a rearward direction, toward the aft end 206. Moreover, as seen most clearly in FIG. 4, each of the mixer lobes 206, at least as defined herein, includes a mixer lobe peak 404 and a pair of mixer lobe valleys 406. It will be appreciated, however, that this is merely exemplary of one convention that may be used to define what comprises a mixer lobe 206. No matter the specific convention used, the mixer lobe peaks 404 extend radially outwardly, and the mixer lobe valleys 406 extend radially inwardly. The mixer lobe peaks 404 direct exhaust gas radially outwardly toward the nacelle 116, whereas the mixer lobe valleys 406 direct bypass air radially inwardly toward the centerbody 144. Preferably, the mixer nozzle 146, and more particularly the mixer lobe valleys 406, is configured to direct at least a portion of the bypass air to impinge directly on the centerbody 144. Before proceeding further, it is noted that although the mixer nozzle 146 in the depicted embodiment includes a total of 16 mixer lobes (based on the convention used herein), this number is merely exemplary of a particular preferred embodiment. Indeed, the total number of mixer lobes 206 could vary, as needed or desired, from engine to engine.

No matter the specific number of mixer lobes 206 that are included, each is aerodynamically shaped to reduce drag, and thus minimize pressure losses in the mixer 138. The aerodynamic shape also minimizes the generation of axial vortices, or angular momentum, which further minimizes pressure losses during the mixing process. The aerodynamic shape of the mixer lobes 308 is provided by implementing each mixer lobe 308 to have a cross-section shape, from aft looking forward, that is defined by the following set of equations:

$$x = r \, Sin \, \theta_r, \qquad \text{Eqn. (1)}$$

$$y = r \, Cos \, \theta_r, \qquad \text{Eqn. (2)}$$

$$ r = \frac{r_t + r_h}{2} + \frac{\left(r_t - \dfrac{r_t + r_h}{2}\right) Cos\left(n\theta\right)}{\left(ABS\left[Cos\left(n\theta\right)\right]\right)^{p_c}}, \qquad \text{Eqn. (3)}$$

$$ \theta_r = \theta + \frac{p_p}{100} Sin\left(2\,n\theta\right) - \frac{p_v}{100} Sin\left(n\theta\right). \qquad \text{Eqn. (4)}$$

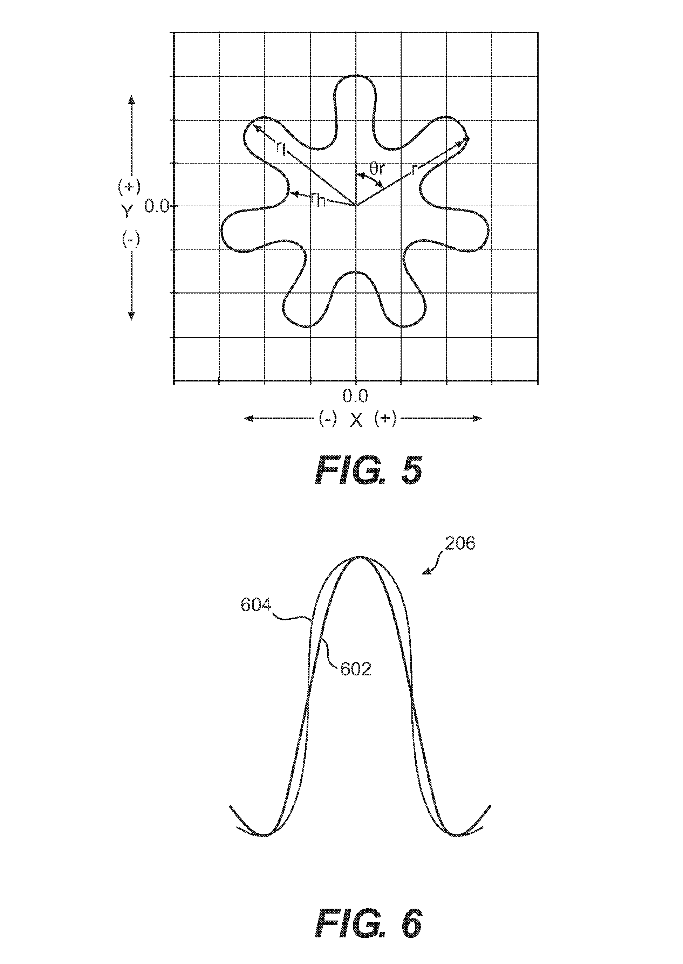

The variables in Equations (1)-(4) are defined below, and for added clarity are also depicted, as appropriate, in FIG. 5:

$\theta = 0 \rightarrow 2\pi$ radians;
$\theta r$ = Angle used to define a point on the mixer lobe cross-section;
$n$ = Number of mixer lobes (n = 7 in FIG. 5);
$P_c$ = Power of lobe cosine function;
$P_p$ = Multiplier of sin function to control the lobe peak shape;
$P_v$ = Multiplier of sin function to control the lobe valley shape and flow area;
r = Radius corresponding to a point on the mixer lobe cross-section;
$r_h$ = Mixer lobe hub radius, this is the minimum radius for the cross-section;
$r_t$ = Mixer lobe tip radius, this is the maximum radius for the cross-section;
x = x coordinate for a point on the mixer lobe cross-section; and
y = y coordinate for a point on the mixer lobe cross-section;

It is noted that although the values of $p_c$, $p_v$, and $Pp$ may vary, preferably the value of $Pc$ is between 0 and 0.2, the value of $p_v$ is defined to obtain a desired flow area, and the value of $p_p$ is between 0 and 2.0. It is further noted that these values may be constant, or one or more of these values may be varied, within these ranges, along the axial position of the mixer nozzle 146 to optimize performance. In one particular preferred embodiment, the value of $p_p$ is about 0.4, and most preferably about 0.425. To clearly illustrate the effect of $p_p$ on mixer lobe 206 cross section shape, two mixer lobe cross-section shapes for $p_p$ values of 0.0 and 2.0 are depicted in FIG. 6. The cross-section shape labeled 602 is for a $p_p$ value of 0.0, and the cross-section shape labeled 604 is for a $p_p$ value of 2.0.

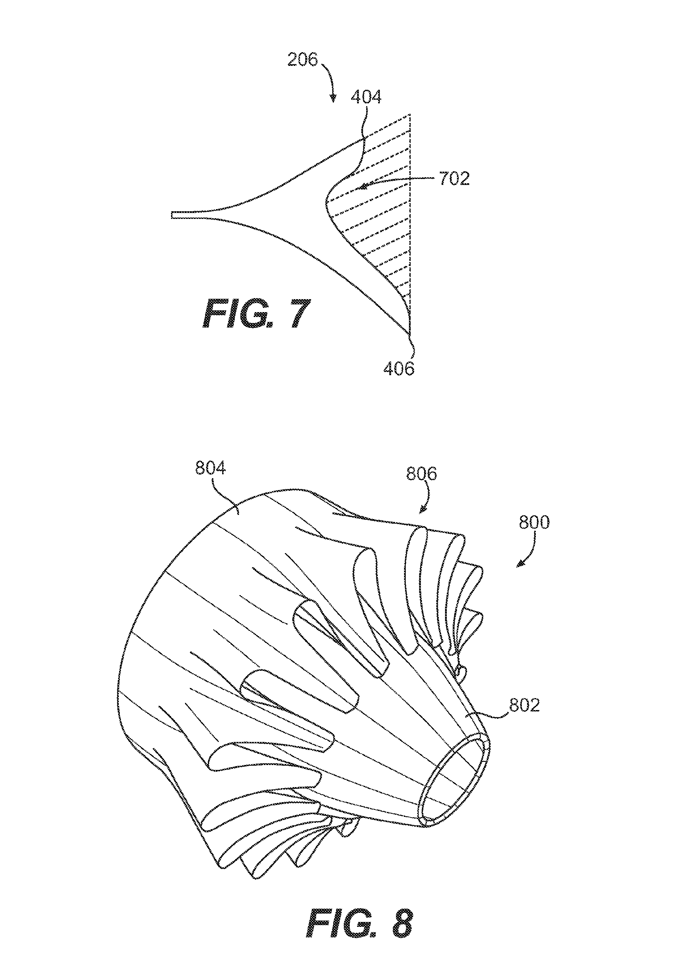

Referring now to FIG. 7, which depicts a profile of a single one of the mixer lobes 206, it may be seen that the mixer lobe peaks 404, as clearly indicated via the dotted lines, do not extend axially rearward as far as the mixer lobe valleys 406. Moreover, although the cross-section shape of each mixer lobe 206 is defined by Equations (1)-(4), scalloped cutouts 702 are formed in each the mixer lobes 206. Thus, the final cross-section shape of each mixer lobe 206 does not solidly follow the relationship defined by Equations (1)-(4). Rather, the scalloped cutouts 702 remove the portion of each mixer lobe 206 that is represented by the dotted, cross-hatched lines depicted in FIG. 7. This should become apparent from the following discussion of a particular preferred methodology for designing the mixer 138.

Initially, a preliminary mixer flowpath is defined based on desired engine operating conditions and with the cross-section shape of each mixer lobe 206 initialized using a $p_p$ value between 0.0 and 2.0. In a particular preferred implementation, the value of $p_p$ is initialized to 0.4. However, any one of numerous other values may be selected.

After the preliminary flowpath is defined, various mixer and mixer flowpath parameters are selectively perturbed to obtain the finalized design. In particular, the mixer flow area ratio (i.e., mixer inlet area/mixer outlet area) and the overall mixer length are selectively perturbed. The mixer lobe peak 404 and mixer lobe valley 406 profiles (see e.g., FIG. 7) are selected. This may or may not include providing the scalloped cutouts 702 described above. As noted above, the mixer lobe valley 406 profile is selected such that bypass air will impinge directly on the centerbody 144. The cross-section shape of each mixer lobe 206 (from aft looking forward) is then selected by setting $p_c$ to a value between 0.0 and 0.2, perturbing $p_p$ to values between 0.0 and 2.0, and setting $p_v$ as required to obtain the desired mixing plane area. Thereafter, the length and shape of the centerbody 144, and the mixing duct length may be selected.

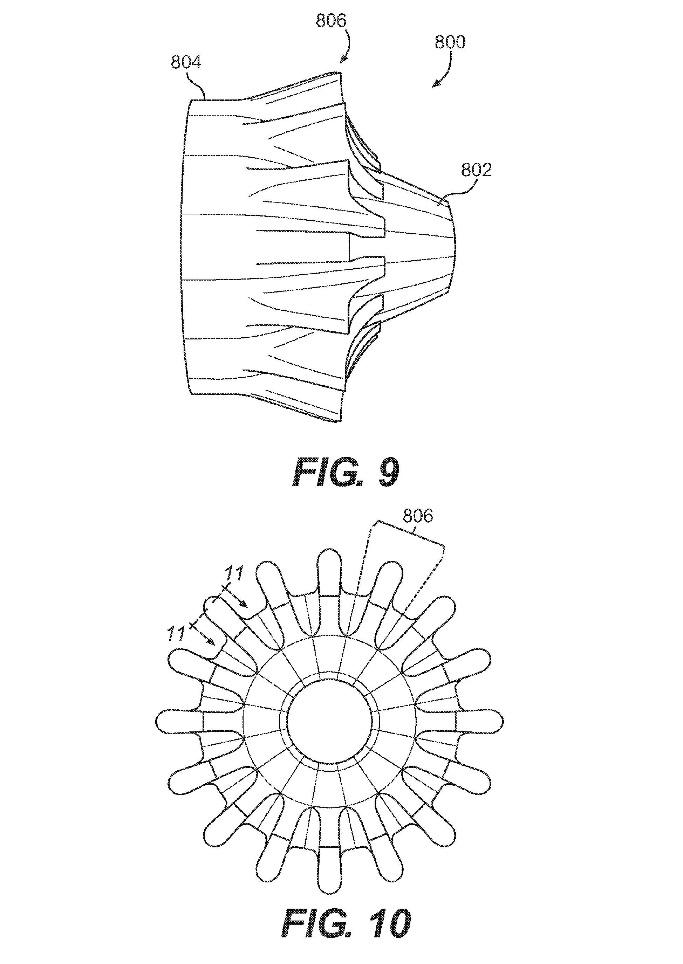

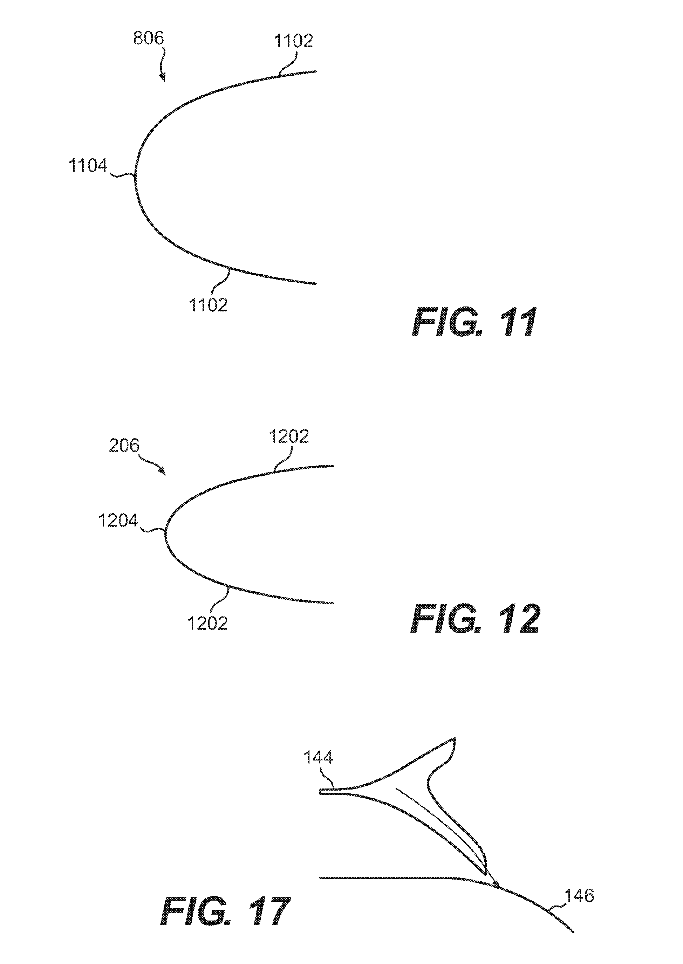

It was noted above that the mixer 138 described herein provides increased performance relative to presently known, standard mixers. For reference purposes, perspective, side, and end views, respectively, of an embodiment of an exemplary standard mixer 800 are depicted in FIGS. 8-10. As FIGS. 8-10 depict, the standard mixer 800 includes a centerbody 802 and a mixer nozzle 804 having a plurality of lobes 806. However, as shown most clearly in FIGS. 10 and 11, the standard mixer lobes 806 have substantially parallel or radial walls 1102, and relatively blunt or rounded leading edges 1104. Conversely, as FIGS. 4 and 12 depict, the aerodynamic mixer lobes 206 described herein have tapered sidewalls 1202, and airfoil-type leading edges 1204. The aerodynamic mixer lobes 206 are thus smaller, are more streamlined, and have less frontal area than standard mixer lobes 806. This, among other things, reduces drag and minimizes mixer pressure losses.

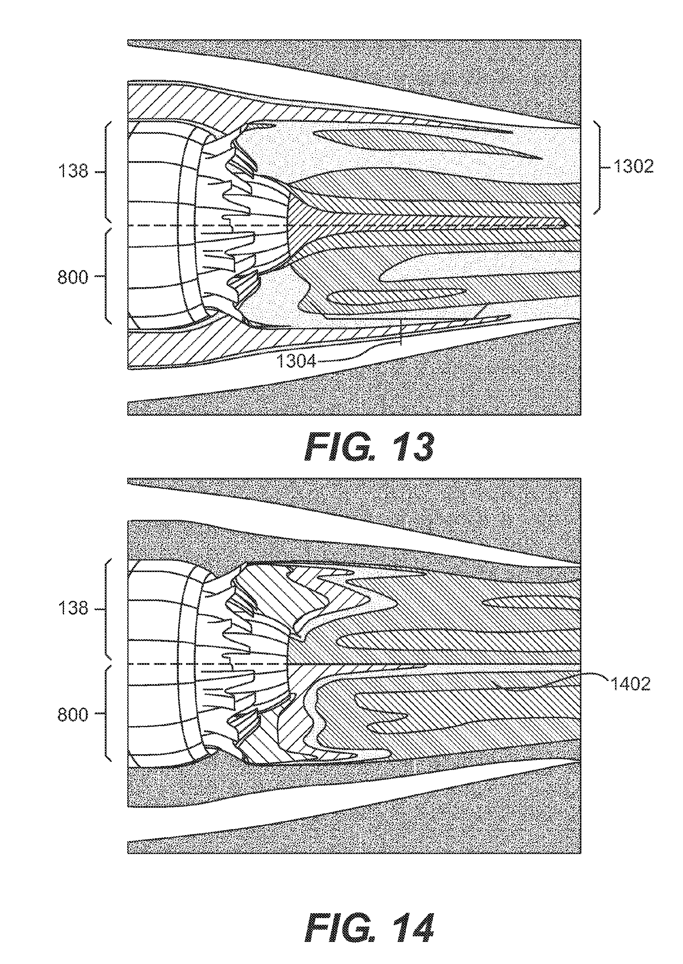

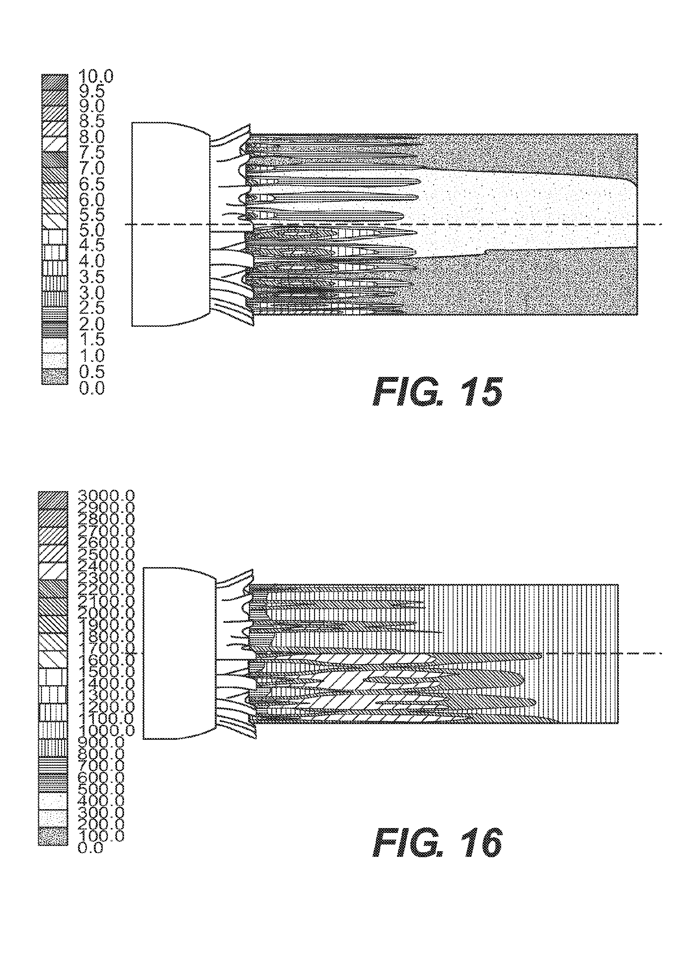

The performance improvements provided by the mixer 138 described herein may most clearly be seen by looking at FIGS. 13-16, which compare various performance parameters in a turbofan engine 100 equipped with a standard mixer to one equipped with a mixer 138 as described herein. In particular, FIG. 13 compares contours of total pressure, FIG. 14 compares contours of total temperature, FIG. 15 depicts contours of velocity angle relative to centerline, and FIG. 16 depicts contours of turbulent intensity. In each of FIGS. 13-16, the upper half depicts the performance parameter in the exhaust section 112 of a turbofan engine 100 equipped with the mixer 138 described herein, and the lower half depicts the performance parameter in the exhaust section 112 of the turbofan engine 100 equipped with a standard mixer 900.

With reference first to FIG. 13, because the mixer nozzle 146 described herein reduces drag and pressure loss, a higher average pressure 1302 as compared to the standard mixer 800 is achieved. Moreover, the low pressure region 1304 caused by the relatively blunt mixer lobe leading edges 1104 the rapid mixing zone associated with the standard mixer 800 is avoided. The temperature contours depicted in FIG. 14 illustrate that the hot core jet 1402 associated with the standard mixer 800 is eliminated. This is due, at least in part, to the fact that the mixer 138 described herein is configured so that, as FIG. 17 clearly depicts, bypass air flow directly impinges upon the centerbody 144. Finally, FIGS. 15 and 16 illustrate that pressure losses resulting from angular momentum generation and from turbulent intensity, respectively, are significantly reduced with the mixer 138 described herein.

The aerodynamic mixer 138 described herein provides improved mixing efficiency and engine performance by exhibiting less pressure loss, a more uniform exit flow temperature profile, and more uniform mixing than is possible with a standard, parallel wall mixer. The mixer 138 described herein has been proven, via testing, to reduce engine thrust specific fuel consumption by more than 0.5% as compared to an engine equipped with a standard mixer design. The skilled artisan will readily appreciate that a reduction in specific fuel consumption of this magnitude (i.e., > 0.5%) is not non-trivial, but is rather quite significant. Indeed, reductions in specific fuel consumption on the order of 0.25 % are generally thought of as significant. As a result, the magnitude reduction in specific fuel consumption wrought by the mixer described herein was wholly unexpected.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A mixer nozzle (146) for a turbofan engine (100), comprising:

a main body having a forward end (202), an aft end (204), a plurality of circumferentially spaced mixer lobes (206) extending therefrom, and an inner surface that defines a flow passage between the forward end (202) and the aft end (204), each of the mixer lobes (206) extending axially in a rearward direction toward the aft end (204) and having a cross-section shape defined by:

$$x = r \, Sin \, \theta_r, \quad y = r \, Cos \, \theta_r$$

$$r = \frac{r_t + r_h}{2} + \frac{\left(r_t - \frac{r_t + r_h}{2}\right) Cos\,(n\theta)}{\left(ABS\left[Cos\,(n\theta)\right]\right)^{p_c}}$$

$$\theta_r = \theta + \frac{p_p}{100} Sin\left(2\,n\theta\right) - \frac{p_v}{100} Sin\left(n\theta\right)$$

where,

$\theta = 0 \rightarrow 2\pi$ radians

$\theta_r$ = Angle used to define a point on mixer lobe cross-section $n$ = Number of mixer lobes

$p_c$ - Power of lobe cosine function

$p_p$ - Multiplier of sin function to control lobe peak shape $p_v$ = Multiplier of sin function to control the valley shape and flow area r = Radius corresponding to a point on mixer lobe cross-section $r_h$ = Mixer lobe hub radius

$r_t$ = Mixer lobe tip radius

x = x coordinate for a point on mixer lobe cross-section $y$ = $y$ coordinate for a point on mixer lobe cross-section

wherein,

$p_c$ is between 0 and 0.2,

$p_v$ is defined to obtain a desired flow area,

$p_p$ is between 0 and 2.0.

2. The mixer nozzle (146) of Claim 1, wherein one of more *of* $p_c$, $p_p$, and $p_v$ are constant along an axial position of the mixer nozzle (146).

3. The mixer nozzle (146) of Claim 1, wherein one of more *of* $p_c$, $p_p$, and $p_v$ vary along an axial position of the mixer nozzle (146).

4. The mixer nozzle (146) of Claim 1, whereinpp is about 0.4.

5. The mixer nozzle (146) of Claim 1, whereinpp is about 0.425.

6. The mixer nozzle (146) of Claim 1, wherein a portion of the mixer lobes (206) extend radially inwardly, and a portion of the mixer lobes (206) extend radially outwardly.

7. A mixer for a turbofan engine (100), comprising:

   a centerbody (144) adapted to couple to a turbofan engine (100) section; and
   a mixer nozzle (146) surrounding at least a portion of the centerbody (144) and spaced apart therefrom to define a core flow path between the mixer nozzle (146) and the centerbody (144), the mixer nozzle (146) adapted to couple to the turbofan engine (100) and including a forward end (202), an aft end (204), and a plurality of circumferentially spaced mixer lobes (206), each of the mixer lobes (206) extending axially in a rearward direction toward the aft end (204), a portion of the mixer lobes (206) extending radially inwardly, and a portion of the mixer lobes (206) extending radially outwardly,
   wherein the mixer lobes (206) are configured, when bypass air flows through the turbofan engine (100), to direct at least a portion of the bypass air to impinge on the centerbody (144).

**FIG. 1**

**FIG. 2**

*FIG. 3*

*FIG. 4*

**FIG. 5**

**FIG. 6**

**FIG. 7**

**FIG. 8**

**FIG. 9**

**FIG. 10**

806
1102
1104
1102

*FIG. 11*

206
1202
1204
1202

*FIG. 12*

144

*FIG. 17*

146

*FIG. 13*

*FIG. 14*

FIG. 15

FIG. 16